# EUROPÄISCHE PATENTSCHRIFT

(11) **EP 0 761 759 B1**
(45) Veröffentlichungstag und Bekanntmachung des Hinweises auf die Patenterteilung: **02.04.2003**
(21) Anmeldenummer: 96113292.5
(22) Anmeldetag: 20.08.1996
(51) Int. Cl.: C08L 83/04, C08K 5/49

(54) **Vernetzbare Siliconzusammensetzungen, ein Verfahren zur Herstellung und deren Verwendung**
Curable silicon compositions, process for their preparation and their use
Compositions réticulables de silicone, leur procédé de préparation et leur utilisation

(30) Priorität: 01.09.1995 DE 19532316
(43) Veröffentlichungstag der Anmeldung: 12.03.1997
(73) Patentinhaber: GE Bayer Silicones GmbH & Co. KG, 40699 Erkrath (DE)
(72) Erfinder: Haselhorst, Rolf, Dr., 51371 Leverkusen (DE)

(56) Entgegenhaltungen:
- US-A- 4 329 275
- US-A- 5 334 687

## Beschreibung

Die vorliegende Erfindung betrifft vernetzbare Mischungen, ein Verfahren zu deren Herstellung und deren Verwendung.

Die Verwendung von Siliconen zur abhäsiven, d.h. klebrige Substanzen abweisenden Beschichtung von Substraten, wie z.B. Papieren, Kunststoff oder Metallfolien u.ä. ist seit geraumer Zeit bekannt. Dabei wird eine flüssige Mischung aus einem vinyl-haltigen Polydiorganosiloxan, einem Si-H-haltigen Polydiorganosiloxan (Polyhydrogensiloxan) und einem geeigneten Katalysator auf das Papier aufgetragen und bei höheren Temperaturen durch eine sogenannte Hydrosilylierungsreaktion ausgehärtet (additionsvernetzende Systeme). Es bildet sich hierbei eine feste, auf dem Substrat haftende Siliconschicht. Das Auftragen der Siliconschicht auf das Substrat erfolgt dabei über Walzen, die aus einer Wanne die flüssige, reaktive Siliconmischung aufnehmen und an das Substrat weitergeben. Fällt nun aus technischen Gründen eine solche Substratbeschichtungsmaschine über einen längeren Zeitraum aus, so kann der Siliconfilm bereits bei Raumtemperatur auf den Walzen vernetzen. Die Folge davon sind äußerst schwer zu entfernende Siliconrückstände auf den Walzen, die ein störungsfreies Weiterarbeiten nach Wiederinbetriebnahme der Maschine unmöglich machen.

Da auch in anderen Anwendungen von additionsvernetzenden Siliconsystemen (z.B. LSR) prinzipiell ähnliche Probleme auftreten, sind in der Vergangenheit zahlreiche Additive (Inhibitoren) entwickelt worden, die allesamt die Funktion haben, die reaktiven Mischungen bei Raumtemperatur länger flüssig zu halten. So zeigt z. B. US-A-4 329 275 die Verwendung von Phosphorverbindungen in Kombination mit Peroxiden als Topfzeitverlängerer. Der Zusatz von Peroxiden ist jedoch mit Sicherheitsrisiken bei der Herstellung und Verarbeitung derartiger Mischungen verbunden. US-A-4 645 815 befaßt sich mit der Verwendung von cyclometallisierten Pt-Phosphit-Komplexen. Hierbei wird der Katalysator-Komplex in einem seperaten Schritt hergestellt, was mit zusätzlichen Kosten verbunden ist. Beide genannten Lösungsmöglichkeiten besitzen jedoch noch einen weiteren, wesentlich gravierenderen Nachteil. Sie sind für Systeme entwickelt worden, die mit relativ niedrigen Konzentrationen an Katalysator arbeiten (10 ppm). In der Substratbeschichtung werden jedoch Siliconmischungen mit einem deutlich höheren Katalysatorgehalt (100 ppm) eingesetzt. Die oben genannten Inhibitoren erfüllen in Systemen mit derartig hohen Katalysatorkonzentrationen nicht die vom Markt gewünschten Anforderungen im Hinblick auf die Raumtemperaturstabilität. US-A-4 851 452 schlägt den Einsatz von Pt-Vinylsiloxankomplexen in Kombination mit Pt-Phosphin-Komplexen als Katalysatoren mit deutlich herabgesetzter Aktivität bei Raumtemperatur vor. Phosphine besitzen jedoch den Nachteil, daß die Aktivität des Katalysators auch bei höheren Temperaturen (T=180°C), also bei Aushärtebedingungen, in merklichem Umfang herabgesetzt wird. Hierdurch sind auch sie für die Anwendung in der Substratbeschichtung nur von sehr begrenztem Wert.

Eine weitere Gruppe häufig verwendeter Inhibitoren sind α-Hydroxyacetylene, die in US-A-3 445 420 näher beschrieben sind. Diese Verbindungen erhöhen zwar die Topfzeit des Systems im "bulk", sind aber im Hinblick auf die Verlängerung der Topfzeit in dünnen Filmen, wie sie während des Beschichtungsvorganges auf den Walzen vorliegen, äußerst unzufriedenstellend.

US-A-5 334 687 offenbart vernetzbare Mischungen, enthaltend
A) alkenylgruppenhaltiges Organopolysiloxan,
B) Organohydrogenpolysiloxan,
C) Metallkatalysator aus der Platingruppe,
D) Acetylenalkohol und
E) mindestens ein Amin ausgewählt aus

   (R²)₂N-R₄-N(R³)₂ oder R₅-NH₂.

Es bestand daher die Aufgabe, geeignete Mischungen bereitzustellen, die auch in schnellen, additionsvernetzenden Siliconsystemen die Aktivität des Katalysators bei Raumtemperatur herabsetzen, ohne die Aushärtezeiten bei Reaktionsbedingungen zu verlängern. Gleichzeitig soll die Mischung einfach und ohne Sicherheitsrisiken hergestellt werden können.

Es wurde nun gefunden, daß die Probleme in additionsvernetzenden Polysiloxanmischungen gelöst werden können, die Pt-Verbindungen oder Pt elementar, ein α-Hydroxyacetylen oder ein Ester einer Dicarbonsäure und mindestens eine Phosphor-organische Verbindung des weiter unten näher spezifizierten Typs enthalten.

Gegenstand der Erfindung sind daher vernetzbare Mischungen, enthaltend:
a) mindestens ein Polysiloxan; das über mindestens zwei olefinisch oder acetylenisch ungesättigte Mehrfachbindungen verfügt,
b) mindestens ein Polyhydrogensiloxan, das über mindestens zwei direkt an das Silicium gebundene Wasserstoffatome verfügt,
c) mindestens eine die Hydrosilylierung katalysierende Substanz,
d) mindestens einen Inhibitor aus der Gruppe bestehend aus Maleinsäure und deren Derivaten, Alkylisocyanuraten und acetylenisch ungesättigten Alkoholen, in denen die OH-Gruppe an ein der C-C-Dreifachbindung benachbartes Kohlenstoffatom gebunden ist, und
e) mindestens eine Phosphorverbindung der allgemeinen Formel P(OR¹)₃ mit R¹ = C₇-C₃₁-Alkylaryl, wobei jedes R¹ innerhalb des Moleküls eine unterschiedliche Bedeutung haben kann.

Komponente a) im Sinne der Erfindung ist vorzugsweise ein cyclisches, lineares oder verzweigtes Polysiloxan, das aus Einheiten der allgemeinen Formel (II)

(R³)ₐ(R⁴)_{b}SiO_{(4-a-b)/2} (II)

aufgebaut ist. Hierin bedeuten R³ ein C₂-C₈-Alkenylradikal, z.B. Vinyl, Allyl, 1-Butenyl, 1-Hexenyl etc. Die Alkenylradikale können an Siliciumatome innerhalb der Kette oder am Ende derselben gebunden sein. R⁴ ist ein einwertiger, gesättigter Kohlenwasserstoffrest mit bis zu 10 Kohlenstoffatomen aus der Gruppe der substituierten und unsubstituierten Alkyl-, Aryl-, und Arylalkylradikale. Beispiele für die einwertigen Radikale R⁴ sind Methyl, Ethyl, Propyl, Isopropyl, Butyl, Octyl, u.s.w., Cyclobutyl, Cyclopentyl, Cyclohexyl, u.s.w., Phenyl, Tolyl, Xylyl, Naphthyl, u.s.w. Benzyl, Phenylethyl, Phenylpropyl. Für die ganzen Zahlen a und b gilt 0 ≤ a ≤ 3 bzw. 0 ≤ b ≤ 3 und 0 ≤ a + b ≤ 4. Vorzugsweise ist a gleich 0 oder 1. In den Radikalen R⁴ der vorliegenden Erfindung können einige oder alle Wasserstoffatome durch Fluor- und / oder Chlor-, Brom-, bzw. Iodatome oder Cyanoradikale substituiert sein. Dies bedeutet, daß R⁴ beispielsweise auch ein Chlormethyl-, Trifluoropropyl-, Chlorophenyl-, Dibromophenyl-, β-Cyanoethyl-, β-Cyanopropyl oder γ-Cyanopropylradikal sein kann.

Mit der dem Fachmann vertrauten Nomenklatur
- M:: (CH₃)₃Si-O_{1/2}
- D:: (CH₃)₂SiO_{2/2}
- T:: (CH₃)SiO_{3/2}
- M^{Vi}:: (CH₂=CH)(CH₃)₂SiO_{1/2}
- D^{Vi}:: (CH₂=CH)(CH₃)SiO_{2/2}
lassen sich folgende Beispiele für die Komponente a) angeben:

M₂D₁₀₀D^{Vi}₃

M^{Vi}₂D₁₈₀

M^{Vi}MD₁₀₀D^{Vi}₃

T₅D₅₅₀M^{Vi}₇

T₃D₅₀₀M^{Vi}₂M₃

T₆D₃₀₀D^{Vi}M^{Vi}₄M₄

Der molare Anteil an ungesättigten Resten des Typs R³ kann beliebig gewählt werden.

In der Komponente a) sollte bevorzugt der molare Anteil an ungesättigten Resten des Typs R³ zwischen 0,01 und 10 mmol pro Gramm, besonders bevorzugt 0,05 und 1 mmol pro Gramm und ganz besonders bevorzugt 0,1 bis 0,7 mmol pro Gramm der Komponente a) betragen. Die Viskosität der Komponente a) beträgt vorzugsweise 0,01 und 100 000 Pa·s, besonders bevorzugt zwischen 10 und 100 000 mPa·s bei 25°C.

Die Komponente b) im Sinne der vorliegenden Erfindung ist ein Polysiloxan, das aus Einheiten der allgemeinen Formel (III)

H_{c}(R⁴)_{d}SiO_{(4-c-d)/2} (III)

aufgebaut ist, wobei R⁴ oben bereits definiert wurde und R⁴ gegebenenfalls auch die Bedeutung von R³ haben kann. Die stöchiometrischen Indices c und d sind ganze Zahlen mit 0 ≤ d ≤ 3 und 0 ≤ c ≤ 2 sowie 0 ≤ c + d ≤ 4. Bevorzugt ist 0 ≤ c ≤ 1.

Beispiele für die Komponente b) mit der dem Fachmann geläufigen Nomenklatur
- M^{H}:: H(CH₃)₂SiO_{1/2}
- D^{H}:: H(CH₃)SiO_{2/2}
lassen sich folgende Beispiele für die Komponente b) angeben:

M^{H}₂D₁₀

M D₁₀D^{H}₁₀

M^{H}₂D₂₀D^{H}₁₀

M^{Vi}₂D^{H}₁₁

M₂D^{Vi}₃D^{H}₈

(M, D, M^{Vi} und D^{Vi} wie bei Komponente a) definiert.).

Der molare Anteil von direkt an ein Siliciumatom gebundenen Wasserstoffatomen in der Komponente b) kann beliebig gewählt werden.

In der Komponente b) liegt vorzugsweise der molare Anteil von direkt an ein Siliciumatom gebundenen Wasserstoffatomen zwischen 0,01 und 17 mmol, besonders bevorzugt zwischen 0,1 und 17 mmol und ganz besonders bevorzugt zwischen 1 und 17 mmol pro Gramm der Komponente b).

In der beschriebenen Gesamtmischung sollten vorzugsweise die Komponenten a) und b) in einem solchen Mengenverhältnis vorliegen, daß das molare Verhältnis von direkt an ein Siliciumatom gebundenen Wasserstoffatomen (SiH) in der Komponente b) zu den ungesättigten Resten (Si-Vinyl) in der Komponente a) zwischen 0,05 und 20 beträgt, besonders bevorzugt zwischen 0,5 und 10 und ganz besonders bevorzugt zwischen 1 und 5.

Komponente c) im Sinne der Erfindung umfaßt vorzugsweise die Elemente Platin, Rhodium, Iridium, Nickel, Ruthenium und/oder Palladium elementar auf einer Trägersubstanz oder in Form ihrer Verbindungen. Bevorzugt sind Platinverbindungen oder Platinkomplexe, wie zum Beispiel H₂PtCl₆, Platin-Olefinkomplexe, Platin-Alkoholkomplexe, Platin-Vinylsiloxankomplexe oder auch elemtares Platin auf einer Trägersubstanz, wie z. B. Aktivkohle, Al₂O₃ oder SiO₂. Besonders bevorzugt ist Komponente c), ein Platin-Vinylsiloxankomplex. Platin-Vinylsiloxankomplexe verfügen vorzugsweise im Siloxan über mindestens 2 olefinisch ungesättigte Doppelbindungen, siehe z.B. US-A- 3 715 334.

Unter den Begriff Siloxan fallen Polysiloxane, d.h. zum Beispiel auch Vinylpolysiloxane. Der Anteil der Komponente c) an der Gesamtmischung sollte vorzugsweise zwischen 1 und 1000 ppm, besonders bevorzugt zwischen 1 und 500 ppm und ganz besonders bevorzugt zwischen 25 und 250 ppm betragen.

Die Komponente d) im Sinne der Erfindung umfaßt alle nach dem Stand der Technik bekannten Inhibitoren wie z.B. Maleinsäure und ihre Derivate, Alkylisocyanuraten und acetylenisch ungesättigte Alkohole, in die OH-Gruppe an ein der C-C-Dreifachbindung benachbartes Kohlenstoffatom gebunden ist, wie sie z. B. in US 3 445 420 näher beschrieben sind. Vorzugsweise handelt es sich bei der Komponente d) um 2-Methyl-3-butin-2-ol oder 1-Ethinylcyclohexanol oder (±) 3-Phenyl-1-butin-3-ol. Die Komponente d) wird der Mischung vorzugsweise in einem Mengenanteil von 0,0001 % bis 5 %, bezogen auf das Gesamtgewicht der Mischung zugesetzt, besonders bevorzugt 0,01 % bis 2 % und ganz besonders bevorzugt 0,1 bis 1 %.

Die Komponente e) im Sinne der Erfindung ist eine Phosphor Verbindung der Formel P(OR¹)₃ mit R¹ = C₇-C₃₁-Alkylaryl, wobei jedes R¹ innerhalb des Moleküls eine unterschiedliche Bedeutung haben kann. Ein Beispiel für die Komponente e) ist Tris-(2,4-di-tert. butylphenyl)-phosphit. Die Komponente e) der vorliegenden Erfindung wird vorzugsweise in einem Mengenanteil von 0,0001 % bis 5 %, bezogen auf das Gesamtgewicht der Mischung, zugesetzt, besonders bevorzugt 0,001 % bis 4 % und ganz besonders bevorzugt zwischen 0,001 % und 2,5 %.

Gegebenenfalls mit zuverwendende Hilfsstoffe sind z.B. Polysiloxanharze, die aus Bausteinen der allgemeinen Formeln (II) und (III) aufgebaut sind, Füllstoffe, die die mechanischen und elektrischen Eigenschaften der ausgehärteten erfindungsgemäßen Mischung positiv beeinflussen, wie z.B. pyrogene und gefällte Kieselsäuren mit einer BET-Oberfläche von 50 bis 500 m²/g. Derartige Füllstoffe können oberflächenmodifiziert sein, z.B. mit siliziumorganischen Verbindungen. Die Modifizierung kann auch während der Einarbeitung in das Polymer durch Zusatz von z.B. Hexamethyldisilazan oder 1,3-Divinyl-1,1,3,3-tetramethyldisilazan unter Zusatz von Wasser erreicht werden.

Weiter können als Füllstoffe Substanzen wie z.B. Diatomeenerden, feinteilige Quarzmehle, amorphe Kieselsäuren oder Ruße eingesetzt werden.

In einer weiteren Ausführungsform enthalten die erfindungsgemäßen Mischungen zusätzlich Wasser oder ein organisches Lösungsmittel.

In einer bevorzugten Ausführungsform der Erfindung liegen die Komponenten a) und b) in einem solchen Mengenverhältnis vor,
daß das Verhältnis SiH:Si-Vinyl zwischen 0,1 und 10,
der Gehalt an Komponente c) zwischen 1 und 1000 ppm,
der Gehalt an Komponente d) zwischen 0,0001 bis 5 % und
der Gehalt an Komponente e) zwischen 0,0001 bis 5 % beträgt,
wobei sich die Mengenangaben jeweils auf das Gesamtgewicht der Mischung beziehen.

Gegenstand dieser Erfindung ist zudem ein Verfahren zur Herstellung der erfindungsgemäßen vernetzbaren Mischungen. Dabei werden vorzugsweise die Komponenten a), d) und e) vermischt, danach die Komponente b) und abschließend die Komponente c) zugegeben.

Gegenstand dieser Erfindung ist zudem die Verwendung der erfindungsgemäßen vernetzbaren Mischung zur Substratbeschichtung.

Die folgenden Beispiele dienen der Erläuterung der Erfindung. Die Erfindung ist jedoch nicht auf die Beispiele beschränkt.

### Ausführungsbeispiele

In den folgenden Beispielen beziehen sich, sofern nicht anderweitig definiert, alle Gewichtsteile und Prozentangaben auf das Gewicht der gesamten Mischung.

### Allgemeine Versuchsvorschrift für die Beispiele 1a bis 1j.

Die in dieser Vorschrift fehlenden Mengenangaben sowie die Art der Verbindungen und die Versuchsergebnisse finden sich in Tabelle 1.

9,15 g eines verzweigten Polydimethylsiloxans mit einer Viskosität von η = 250 mPa·s und einem Gehalt von direkt an das Silicium gebundenen Vinylgruppen von 0,32 mmol/g werden gegebenenfalls mit einem α-Hydroxyacetylen (siehe Tab. 1) und gegebenenfalls einer Phosphor-organischen Verbindung (siehe Tab. 1) gemischt. Anschließend werden 0,75 g eines Polyhydrogensiloxans zugegeben, das einen Anteil von direkt an das Silicium gebundenen Wasserstoffatomen von 11,3 mmol/g hat. Abschließend wurde eine ausreichende Menge einer Lösung eines Pt-Vinylsiloxan-Komplexes dem beschriebenen Vinyl-haltigen Polymer zugegeben, um einen Pt-Gehalt von 100 ppm einzustellen. Die Abkürzungen in der folgenden Tabelle bedeuten:
- ECH :: 1-Ethinylcyclohexanol
- PhB :: (±)-3-Phenyl-1-butin-3-ol
- PoV1:: Triphenylphosphit
- PoV2:: Triethylphosphit
- PoV3:: Triisopropylphosphit
- PoV4:: Tris-(2,4-di-tert. butylphenyl)-phosphit
- PoV5:: Triphenylphosphinoxid (Vergleich)
- PoV6:: Trimethylphosphit

**Tabelle 1**

| Bsp.-Nr. | α-Hydroxyacetylen | Menge | Phosphororganische Verbindung | Menge | Topfzeit im dünnen Film | Topfzeit im Bulk |
|---|---|---|---|---|---|---|
| 1a¹⁾ | ECH | 27 mg | - | - | 20 min | 24 h |
| 1b¹⁾ | - | - | PoV4 | 10 mg | 5 s | 5 s |
| 1c | ECH | 27 mg | PoV4 | 10 mg | 22 h | >10 Tage |
| 1d¹⁾ | ECH | 27 mg | PoV3 | 10 mg | 3 h 15 min | >6 Tage |
| 1e¹⁾ | ECH | 27 mg | PoV2 | 10 mg | 4 h 15 min | >6 Tage |
| 1f¹⁾ | ECH | 27 mg | PoV6 | 10 mg | 2 h 20 min | >6 Tage |
| 1g¹⁾ | - | - | PoV1 | 10 mg | 1 h 40 min | >6 Tage |
| 1h¹⁾ | ECH | 27 mg | PoV1 | 10 mg | 22 h | >10 Tage |
| 1i¹⁾ | PhB | 10 mg | - | - | 20 min | 24 h |
| 1j¹⁾ | PhB | 10 mg | PoV1 | 10 mg | 26 h | >10 Tage |

| | | | | | | |
|---|---|---|---|---|---|---|
| ¹⁾ Vergleichsbeispiele | | | | | | |

Die Kombination der Komponenten d) und e) ist ein wesentlicher Bestandteil dieser Erfindung. Wie aus den Vergleichsbeispielen 1a, 1b, 1g und 1i ersichtlich, führt die Anwesenheit nur einer der beiden Komponenten nicht zu einer langen Tropfzeit.

### Beispiel 2

Im folgenden Beispiel soll der Einfluß bestimmter Phosphor-organischer Verbindungen auf die Aushärtezeiten bei T = 180°C demonstriert werden. Zu 8,96 g des in Beispiel 1 beschriebenen vinyl-haltigen Polymers wurden ein α-Hydroxyacetylens und eine Phosphor-organische Verbindung in der in Tabelle 2 näher beschriebenen Art und Menge gegeben. Danach wurden 0,21 g des in Beispiel 1 beschriebenen Polyhydrogensiloxans und eine ausreichende Menge der in Beispiel 1 beschriebenen Katalysatorlösung zugegeben, um einen Pt-Gehalt von 100 ppm einzustellen. Ergebnisse siehe Tabelle 2.

**Tabelle 2**

| α-Hydroxyacetylen | Menge | Phosphororganische Verbindung | Menge | Topfzeit im dünnen Film | Aushärtezeit bei T = 180°C |
|---|---|---|---|---|---|
| ECH¹⁾ | 27 mg | | | 20 min | 7 s |
| ECH | 27 mg | PoV4 | 10 mg | 21 h | 7 s |
| ECH¹⁾ | 27 mg | PoV5 | 10 mg | 50 min | >60 s |

| | | | | | |
|---|---|---|---|---|---|
| ¹) Vergleichsbeispiele | | | | | |

### Beispiel 3

Das folgende Beispiel soll den synergistischen Effekt der inhibierenden Wirkung eines Dicarbonsäureesters und einer Phosphor-organischen Verbindung demonstrieren.

9,15 g eines verzweigten Polydimethylsiloxans mit einer Viskostität von η = 250 mPa.s und einem Gehalt von direkt an das Silizium gebundenen Vinylgruppen von 0,32 mmol g⁻¹ werden mit einer Phosphor-organischen Verbindung und einem Dicarbonsäureester vermischt. Anschließend werden 0,55 g eines Polyhydrogensiloxans zugegeben, das einen Anteil von direkt an das Silizium gebundenen Wasserstoffatomen von 11,3 mmol g⁻¹ besitzt. Anschließend wird eine ausreichende Menge einer Lösung eines Pt-Vinylsiloxankomplexes zugegeben, um einen Pt-Gehalt von 100 ppm einzustellen. Die genauen Mengen sowie die Art der eingesetzten Inhibitoren sind der Tabelle 3 zu entnehmen. Die Bezeichnung der Phosphor-organischen Verbindung in analog Beispiel 1.

**Tabelle 3**

| Bsp.-Nr. | Dicarbonsäureester | Menge | Phosphororganische Verbindung | Menge | Topfzeit im dünnen Film |
|---|---|---|---|---|---|
| 3a¹⁾ | Maleinsäuredimethylester | 0 mg | PoV4 | 10 mg | 5 s²⁾ |
| 3b¹⁾ | Maleinsäuredimethylester | 32 mg | PoV4 | 0 mg | 25 min |
| 3c | Maleinsäuredimethylester | 32 mg | PoV4 | 10 mg | 12 h |

| | | | | | |
|---|---|---|---|---|---|
| ¹) Vergleichsbeispiele | | | | | |
| ²) Die gesamte Mischung vergelte unmittelbar nach der Zudosierung der Pt-Katalysatorlösung | | | | | |

## Patentansprüche

1. Vernetzbare Mischung, enthaltend:
a) mindestens ein Polysiloxan, das über mindestens zwei olefinisch oder acetylenisch ungesättigte Mehrfachbindungen verfügt,
b) mindestens ein Polyhydrogensiloxan, das über mindestens zwei direkt an das Silizium gebundene Wasserstoffatome verfügt,
c) mindestens eine die Hydrosilylierung katalysierende Substanz,
d) mindestens einen Inhibitor aus der Gruppe bestehend aus Maleinsäure und deren Derivaten, Alkylisocyanuraten und acetylenisch ungesättigten Alkoholen, in denen die OH-Gruppe an ein der C-C-Dreifachbindung benachbartes Kohlenstoffatom gebunden ist, und
e) mindestens eine Phosphorverbindung der allgemeinen Formel P(OR¹)₃ mit R¹ = C₇-C₃₁-Alkylaryl, wobei jedes R¹ innerhalb des Moleküls eine unterschiedliche Bedeutung haben kann.

2. Vernetzbare Mischung nach Anspruch 1, **dadurch gekennzeichnet, dass** die Komponente c) eine Pt-Verbindung oder Platinkomplexe oder elementares Platin auf einer Trägersubstanz ist.

3. Vernetzbare Mischung nach einem der Ansprüche 1 bis 2, **dadurch gekennzeichnet, dass** Komponente c) ein Platin-Vinylsiloxankomplex ist, in dem das Siloxan über mindestens zwei olefinisch ungesättigte Doppelbindungen verfügt.

4. Vernetzbare Mischungen nach einem der Ansprüche 1 bis 3, **dadurch gekennzeichnet, dass** Komponente d) 2-Methyl-3-butin-2-ol oder 1-Ethinylcyclohexanol oder (+/-)-3-Phenyl-1-butin-3-ol ist.

5. Vernetzbare Mischung nach einem der Ansprüche 1 bis 4, **dadurch gekennzeichnet, dass** diese zusätzlich Wasser enthalten.

6. Vernetzbare Mischung nach einem der Ansprüche 1 bis 4, **dadurch gekennzeichnet, dass** diese zusätzlich ein organisches Lösungsmittel enthalten.

7. Vernetzbare Mischung nach einem der Ansprüche 1 bis 6, **dadurch gekennzeichnet, dass** die Komponenten a) und b) in einem solchen Mengenverhältnis vorliegen, dass das Verhältnis SiH:Si-Vinyl zwischen 0,01 und 300 beträgt, der Gehalt an Komponente c) zwischen 1 und 1000 ppm, der Gehalt an Komponente d) zwischen 0,0001% bis 5 % und der Gehalt an Komponente e) zwischen 0,0001% bis 5 % beträgt, wobei sich die Mengenangaben jeweils auf das Gesamtgewicht der Mischung beziehen.

8. Verfahren zur Herstellung einer vernetzbaren Mischung nach einem der Ansprüche 1-7, **dadurch gekennzeichnet, dass** die Komponenten a), d) und e) vermischt werden, anschließend die Komponenten b) und zuletzt die Komponente c) zugegeben wird.

9. Verwendung der vernetzbaren Mischung nach einem der Ansprüche 1 bis 7 zur Substratbeschichtung.

## Claims

1. Crosslinkable mixture comprising:
a) at least one polysiloxane which has at least two olefinically or acetylenically unsaturated multiple bonds,
b) at least one polyhydrogensiloxane which has at least two hydrogen atoms bound directly to the silicon,
c) at least one substance which catalyses hydrosilylation,
d) at least one inhibitor selected from the group consisting of maleic acid and its derivatives, alkyl isocyanurates and acetylenically unsaturated alcohols in which the OH group is bound to a carbon atom adjacent to the C-C triple bond and
e) at least one phosphorus compound of the general formula P(OR¹)₃ in which R¹ = C₇-C₃₁-alkylaryl, where each R¹ in the molecule may have a different meaning.

2. Crosslinkable mixture according to Claim 1, **characterized in that** the component c) is a Pt compound or a platinum complex or elemental platinum on a support substance.

3. Crosslinkable mixture according to Claim 1 or 2, **characterized in that** component c) is a platinum-vinylsiloxane complex in which the siloxane has at least two olefinically unsaturated double bonds.

4. Crosslinkable mixtures according to any of Claims 1 to 3, **characterized in that** component d) is 2-methyl-3-butyn-2-ol or 1-ethynylcyclohexanol or (+/-)-3-phenyl-1-butyn-3-ol.

5. Crosslinkable mixture according to any of Claims 1 to 4, **characterized in that** it additionally contains water.

6. Crosslinkable mixture according to any of Claims 1 to 4, **characterized in that** it additionally contains an organic solvent.

7. Crosslinkable mixture according to any of Claims 1 to 6, **characterized in that** the components a) and b) are present in such a molar ratio that the ratio SiH:Si-vinyl is from 0.01 to 300, the content of component c) is from 1 to 1 000 ppm, the content of component d) is from 0.0001% to 5% and the content of component e) is from 0.0001% to 5%, where the amounts specified are in each case based on the total weight of the mixture.

8. Process for preparing a crosslinkable mixture according to any of Claims 1-7, **characterized in that** the components a), d) and e) are mixed, the component b) is subsequently added and the component c) is added last.

9. Use of the crosslinkable mixture according to any of Claims 1 to 7 for coating substrates.

## Revendications

1. Mélange réticulable, contenant :
a) au moins un polysiloxane qui dispose d'au moins deux liaisons multiples oléfiniquement ou acétyléniquement insaturées,
b) au moins un polyhydrogénosiloxane qui dispose d'au moins deux atomes d'hydrogène liés directement au silicium,
c) au moins une substance catalysant l'hydrosilylation,
d) au moins un inhibiteur du groupe composé de l'acide maléique et de ses dérivés, des alkylisocyanurates et des alcools acétyléniquement insaturés, dans lesquels le groupe OH est lié à un atome de carbone voisin de la liaison triple C-C, et
e) au moins un composé de phosphore de formule générale P(OR¹)₃ avec R¹ = C₇-C₃₁-alkylaryle, où chaque R¹ au sein de la molécule peut avoir une signification différente.

2. Mélange réticulable selon la revendication 1, **caractérisé en ce que** le composant c) est un composé de Pt ou des complexes de platine ou du platine élémentaire sur une substance support.

3. Mélange réticulable sleon l'une des revendications 1 et 2, **caractérisé en ce que** le composant c) est un complexe de platine-vinyl-siloxane dans lequel le siloxane dispose d'au moins deux doubles liaisons oléfiniquement insaturées.

4. Mélanges réticulables selon l'une des revendications 1 à 3, **caractérisés en ce que** le composant d) est le 2-méthyl-3-butin-2-ol ou le 1-éthinylcyclohexanol ou le (+/-)-3-phényl-1-butin-3-ol.

5. Mélange réticulable selon une des revendications 1 à 4, **caractérisé en ce qu'**il contient en outre de l'eau.

6. Mélange réticulable selon une des revendications 1 à 4, **caractérisé en ce qu'**il contient en outre un solvant organique.

7. Mélange réticulable selon une des revendications 1 à 6, **caractérisé en ce que** les composants a) et b) sont présents en un mélange quantitatif tel que le rapport SiH:Si-vinyle est compris entre 0,01 et 300, la teneur en composant c) est comprise entre 1 et 1000 ppm, la teneur en composant d) est comprise entre 0,0001 % et 5 % et la teneur en composant e) est comprise entre 0,0001 % et 5 %, les indications quantitatives se référant chaque fois au poids total du mélange.

8. Procédé de préparation d'un mélange réticulable selon une des revendications 1 à 7, **caractérisé en ce que** les composants a), d) et e) sont mélangés, que le composant b) est ensuite ajouté et enfin le composant c).

9. Utilisation du mélange réticulable selon une des revendications 1 à 7 pour l'enduction d'un substrat.
